# EUROPEAN PATENT APPLICATION

(11) **EP 3 273 396 A2**
(43) Date of publication of application: **24.01.2018**
(21) Application number: 17001240.5
(22) Date of filing: 20.07.2017
(51) Int. Cl.: G06Q 20/14

(54) **METHOD TO INITIATE AND TERMINATE A VEHICLE'S AUTOMATED PARKING SESSION IN A RESTRICTED PARKING AREA**

(30) Priority: 22.07.2016 EE 201600013
(71) Applicant: Autlo Oü, 11214 Tallinn (EE)
(72) Inventor: Konks, Kristjan, 11214 Tallinn (EE)
(74) Representative: Koitel, Raivo

(57) **Abstract**

The invention provides a method for automatic initiation and termination of a vehicle's parking session in a restricted (such as paid, time-restricted etc.) parking area by means of a control program (mobile application) located in a user terminal (such as a smartphone), which monitors the local connection between the user terminal and the vehicle through Bluetooth or another communication link. In case of loss of the local connection, the control program of the user terminal determines the location of the user terminal and initiates the automatic parking procedure; and when the local connection is restored between the vehicle's communication sensor or detector and the user terminal, the control program of the user terminal automatically starts the procedure for termination of parking, while notifying the central server automatically about the initiation and termination of a parking procedure over the internet access. Instead of Bluetooth connection, other local connection means can be used, such as Wi-Fi, infrared, cable connection, connection with the charger, wireless charging, identification of sound objects with different sensors and detectors etc. If the internet access is unavailable, parking procedure activities are recorded locally in the user terminal, and are saved in the central server after the internet access has been restored.

## Description

### Technical field

This invention belongs in the field of methods for the organisation of the parking of vehicles, specifically among methods by which the beginning/end of a vehicle's parking session in a restricted parking area (in paid parking or for example in a car park with time restriction or permits, etc.) is fixed and/or accounting for the parking fee or parking based on a parking disc or a permit is performed by means of existing electronic devices of the user and vehicle or with automatic systems.

### Prior art

In cities and other areas with high concentration of vehicles, there are areas where the demand for parking exceeds the supply. Parking in these areas is regulated by means of
- establishing a fee for parking;
- restricted parking rights (e.g. based on permits);
- restricted parking time (e.g. based on parking clock);
- combinations of the above-said.

The majority of known solutions use electronic devices for the payment of vehicle parking. Payment is executed via SMS text messages, data communication, mobile apps or other electronic applications. A parking session is generally activated by an individual, i.e. the user of the vehicle, by giving a relevant order (see Estonian utility model No. EE 00315 U1, published 15.07.2002).

Known is also a method from patent EE05704 (published 17.12.2012) for organisation of parking, in which the event of initiating a vehicle's parking is activated by an on-board microprocessor of the vehicle, and the parking event is linked to a parking zone in the system of the parking service provider.

Known is a method where the parking location is determined by a mobile device application by detecting a connection with the car and mobile device (US9080878, published 21.02.2013).

Known is the controlling of external car park equipment through Bluetooth devices (CN104899950, published 09.09.2015) and finding available parking spaces with the help of a smartphone and Bluetooth (CN104575100, published 29.04.2015).

Known are methods for locating a vehicle and parking of a vehicle and positioning the vehicle in connection with a parking zone, using the positioning means of a mobile device and a communication link with the vehicle (e.g. Bluetooth) without the user of the vehicle interfering (US20140028477, published 30.01.2014 and US 9080878 B2, published 14.07.2015).

Known are methods for procedures related to vehicle's location and vehicle's parking (WO2016081436 A1 and US2015317840 A1), which describe activities related to the parking of a vehicle, whereby the solutions allow the user to specify the parking zone as well as use communication solutions that are based on short range communication technologies (e.g. Bluetooth) to detect the movement of the vehicle and detect the vehicle for the user's terminal device. In the known solution, a system installed in the vehicle terminates the parking session automatically, when it detects the movement of the vehicle.

The drawback of the prior solutions is that in order to activate the parking session in a restricted (e.g. paid) zone, the user has to do it manually, or if the parking session is activated by the vehicle, then supplementary equipment must be installed in the vehicle, entailing extra costs for the user. Some of the solutions provided in the prior art are also usable only in non-restricted parking areas. In known solutions there is also no fully automatic forwarding of parking orders to the end system of the parking service provider.

### Summary of the invention

The invention relates to a method for the initiation and termination of a vehicle's parking session in a restricted parking zone by means of a control program (e.g. mobile application) located in a user terminal (e.g. smartphone), using for this purpose the communication between the user terminal and a communication sensor (such as Bluetooth or similar) existing in the vehicle and the location of the user terminal.

The invention presents a solution, whereby the local connection between the user terminal and the vehicle's communication sensor (e.g. Bluetooth connection) is monitored by means of a parking software and mobile application and:
- an order for initiation of parking is formed when connection is lost,
- an order for termination of parking is formed when connection is formed.

It is essential that the order reaches the end system of the parking service provider, where payments are made automatically or account is kept over parking permits or time-restricted parking.

This invention presents a method for an electronic parking of vehicles, whereby a user terminal (such as a smartphone of the user) is permitted to initiate and terminate parking sessions automatically, or prompt initiation and termination of such, when the vehicle is being parked in a restricted parking zone. The objective is to avoid the need for manual handling of parking fees and to simplify selecting the parking zone and to rule out the risk that the user forgets to initiate or terminate a parking session, also to allow users to apply the method without the need to procure and install any extra equipment.

A prerequisite for the invention is the availability of the following devices and technical capacities:
- a user terminal (e.g. smartphone), with capability for local connection (e.g. Bluetooth or similar connection);
- availability of a communication sensor, which allows the same local connection (e.g. hands-free device of the telephone) in the vehicle;
- availability of a mobile application in the user terminal, intended to monitor the existence of a local connection between the user terminal and the communication sensor of the vehicle.

According to the method, the procedure is as follows:
- Vehicle 1 is parked in a restricted parking zone. The signal between the communication sensor or detector 7 in local connection 2 of the vehicle 1 and user terminal 3 (such as a smartphone), which is connected to the vehicle through communication sensor or detector 7 (such as a Bluetooth connection, infrared, Wi-Fi, data cable, charging cable, wireless charging, identification of audio objects or other local connection) and is equipped with relevant mobile application, is interrupted. Parking procedure is initiated in user terminal 3, which includes sending over the internet access 4 to central server 5 information about lost local connection 2 with the communication sensor or detector 7 of the vehicle, adding the coordinates of the user terminal 3 and a time stamp. If internet access 4 is unavailable, the parking procedure activities are saved in user terminal 3 and after the internet access 4 is restored, the data are saved in central server 5.
- Central server 5 compares the position of vehicle 1 with locations P₁, P₂ to Pₙ of known restricted parking zones and if parked in or nearby a parking zone, a restricted parking session is started or the user of vehicle 1 is prompted to confirm initiation of a parking session. After initiation of the parking session either automatically or after the manual confirmation by the user, the data are sent to the parking and payment operator system 6 and vehicle 1 gains the right to park in the restricted parking zone and the user is imposed with an obligation to observe the restrictions of the parking zone, such as to pay for the parking session and/or park within the time limit; when approaching the end of the time limit, the user can be notified thereof by sending to user terminal 3 over the internet access 4 through the central server 5 the information about reaching the time limit or an enquiry.
- Upon termination of a parking session, the procedure for termination of parking is formed upon activation of connection 2 (such as Bluetooth) between communication sensor or detector 7 of vehicle 1 and user terminal 3. Data together with a time stamp about the formation of connection 2 between communication sensor or detector 7 and vehicle 1 is sent with the help of user terminal 3 over the internet access 4 to central server 5.
- A parking session is terminated either automatically or a query is sent to user terminal 3 for the user to confirm the termination of the parking session. In case of a paid or restricted parking session, an order is sent electronically to the payment system 6 of parking and/or payment operator O₁, O₂ to On.

The above-described stages of the method are completed, by applying hardware and a respective control program (also e.g. mobile application).

The application criteria (e.g. changes in the strength of existing local connection), delay time upon formation or loss of connection, required minimum time of connection, etc. can be further configured as needed.

### List of figures

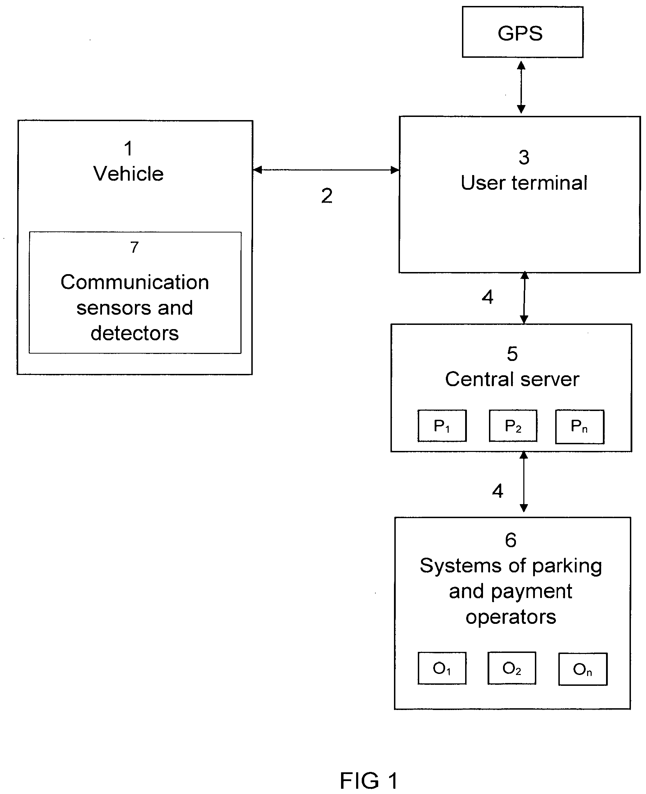

Figure 1 depicts a conceptual flowchart of activities under the method of the invention.
Figure 2 depicts a flowchart of activities, describing the sequence of activities carried out by the user according to the method of the invention.

### Embodiments of the invention

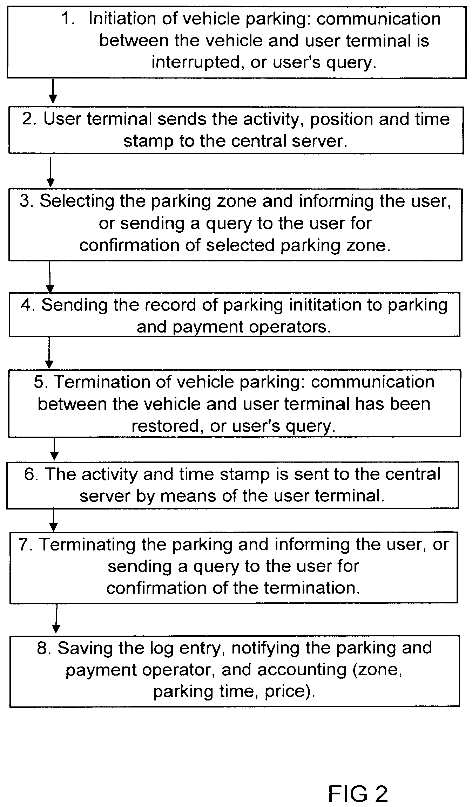

According to a preferred embodiment of the method, the activities can be described with the help of the flowchart of user's activities, Figure 2, as follows:
- Step one. Parking is initiated, connection 2 between the communication sensor or detector 7 (such as Bluetooth) existing in vehicle 1 and user terminal 3 is interrupted.
- Step two. Information about lost data connection 2 with communication sensor or detector 7 is sent by user terminal 3 over the internet access 4 to central server 5, adding the coordinates and time stamp of user terminal 3.
- Step three. Central server 5 compares the position of user terminal 3 with locations P₁, P₂ up to Pn of known restricted parking zones and if parked in or nearby a parking zone, a restricted parking session is started or an enquiry is sent to user terminal 3 for the user of vehicle 1 to confirm formation of a parking session.
- Step four. After automatic formation or confirmation by the user, the data are sent to the payment system 6 of parking and/or payment operator O₁, O₂ to On and vehicle 1 gains the right to park in the restricted parking zone and the obligation to observe the restrictions, such as to pay for the parking session and/or park within the time limit.
- Step five. Termination of parking is detected, when connection 2 between the communication sensor or detector 7 (such as Bluetooth) and the user terminal 3 is restored in vehicle 1.
- Step six. Data together with a time stamp about the formation of connection 2 with communication sensor or detector 7 is sent from user terminal 3 over the internet access 4 to central server 5.
- Step seven. Parking session is terminated automatically and the user is informed, or the user is prompted to confirm the termination of parking.
- Step eight. In case of a paid parking session, an order is sent electronically to the payment system 6 of parking or payment operator O₁, O₂ to On, where the parking session is paid for.

The user of the vehicle always has an additional option to separately switch on and off the automatic parking system of vehicle 1, and to start by themselves the parking initiation or termination procedures for vehicle 1 (such as by initiating a parking session manually while connection 2 with communication sensor or detector 7 is available or by terminating a parking session manually prior to formation of connection 2 with communication sensor or detector 7). The invention can also be used in case of poor or partial internet access 4, in which case the activities are saved in user terminal 3 in the course of the activities, and after the internet access 4 has been restored, are uploaded to central server 5.

Instead of the Bluetooth connection (pairing) as a local connection 2 between the communication sensor or detector 7 of vehicle 1 and user terminal 3, another method for mutual detection of devices can be used, such as Wi-Fi, infrared, cable connection, charger connection, wireless charger, identification of audio objects with the signals of various sensors and detectors, etc.

The use and embodiment example of the invention in no way restricts any modifications of this solution, and is not limited to the presented embodiments or modifications simply derived therefrom, but covers all the solutions, which are different from those described, but are covered by the claims.

## Claims

1. A method for an automatized initiation and termination of a vehicle's parking session in a restricted parking zone, applied in a hardware and software-based system, comprising steps for identifying the vehicle and its position in relation to the parking zone, exchange of data between the central server of the system and if necessary a carpark equipment, whereas the system comprises a user terminal (3) together with a control program, and a user terminal-connected central server (5) which again is linked to the systems of parking and payment operators (6), and one or more communication sensors or detectors (7) located in the vehicle, and wherein the central server is set to provide feedback about the status of parking sessions; a method **characterized in that** a control program is applied in the user terminal (3) for monitoring the local connection (2) of the communication sensor or detector (7) of the vehicle (1) by means of the user terminal (3), and in case the local connection (2) is lost, the position of user terminal (3) is detected by the control program of the user terminal (3) and the parking procedure of the vehicle (1) is started automatically, and when the fixed connection (2) between the communication sensor or detector (7) of the vehicle (1) and the user terminal (3) is restored, the procedures for termination of the parking of the vehicle (1) is initiated by the control program of the user terminal (3), which notifies the central server (5) automatically over the internet access (4) about the commencement or termination of the parking procedure.

2. A method according to claim 1, **characterized in that** a recommendation or query generated by the control program is sent to the user through the user terminal (3) for initiation or termination of a parking session and the user should manually confirm the activity for initiation of the parking session.

3. A method according to claims 1 and 2, **characterized in that** the user is notified about reaching a limit, whereby the central server (5) sends the information about reaching the limit or an enquiry to the user terminal (3) via the internet access (4).

4. A method according to claims 1 to 3, **characterized in that** in case of no internet access (4), the activities under parking procedures are saved in the user terminal (3) and after the internet access (4) has been restored, the data are saved in the central server (5).

5. A method according to claims 1 to 4, **characterized in that** the parking session data are sent from the central server (5) automatically to the systems (6) of parking and payment operators for the accounting of the parking fee or granting of parking right to the vehicle (1), and the signals of communication sensors and detectors (7) are used for more precise detection of the event of parking initiation or termination.

6. A method according to claims 1 to 5, **characterized in that** the mutual local connection (2) applied for the devices includes Bluetooth, infrared, Wi-Fi, cable connection, charger connection, wireless charging or identification of audio objects by means of communication sensors and detectors (7).
